# EUROPÄISCHE PATENTANMELDUNG

(11) **EP 3 486 634 A1**
(43) Veröffentlichungstag der Anmeldung: **22.05.2019**
(21) Anmeldenummer: 18201737.6
(22) Anmeldetag: 22.10.2018
(51) Int. Cl.: G01N 15/02, G01N 15/14

(54) **PARTIKELSENSOR**

(30) Priorität: 16.11.2017 DE 102017220461
(71) Anmelder: Robert Bosch GmbH, 70442 Stuttgart (DE)
(72) Erfinder: Mouil Sil, Ghislain, 70825 Korntal-Muenchingen (DE); Baumgart, Eugen, 75385 Bad Teinach-Zavelstein (DE); Viehmann, Christian, 73669 Lichtenwald (DE); Haaga, Gerhard, 73275 Ohmden (DE); Aquino Maier, Daniel, 70499 Stuttgart (DE)

(57) **Zusammenfassung**

Ein Partikelsensor (2; 3) hat eine oder mehrere Strahlungsquellen (4; 4a, 4b), wenigstens einen Strahlungsdetektor (14a; 14b), der ausgebildet ist, elektromagnetische Strahlung (12a, 12b), die von der wenigstens einen Strahlungsquelle (4; 4a, 4b) ausgegeben und von wenigstens einem Partikel (10) gestreut worden ist, zu detektieren und ein korrespondierendes Detektionssignal bereitzustellen, und eine Auswertungsvorrichtung (20). Die Gesamtheit der Strahlungsquellen (4; 4a, 4b) ist ausgebildet, elektromagnetische Strahlung (6; 6a, 6b) abzugeben, die wenigstens zwei verschiedene Wellenlängen hat. Das Detektionssignal ist vom Streuwinkeln und/oder von der Wellenlänge (λ) der elektromagnetischen Strahlung (6; 6a, 6b) abhängig. Die Auswertungsvorrichtung (20) ist ausgebildet, das von dem wenigstens einen Strahlungsdetektor (14a; 14b) bereitgestellte Detektionssignal auszuwerten, um die Größe des wenigstens einen Partikels (10) zu bestimmen.

## Beschreibung

### Partikelsensor

Die Erfindung betrifft einen Partikelsensor zum Bestimmen der Größe von Partikeln in einem Partikelstrom, insbesondere in einem Abgasstrom eines Verbrennungsmotors.

### Stand der Technik

Bei der Nachbehandlung und Messung von Abgasen von Verbrennungsmotoren besteht ein Bedürfnis, die Größe von Partikeln, beispielsweise Rußpartikeln, die in den Abgasen enthalten sind, zu bestimmen.

Bekannte Verfahren zur Bestimmung der Partikelgröße beruhen auf dem Prinzip der Trübung durch Lichtextinktion. Diese Verfahren sind aber nur bei relativ hohen Partikelkonzentrationen zuverlässig.

### Offenbarung der Erfindung

Es ist daher eine Aufgabe der Erfindung, einen verbesserten Partikelsensor bereitzustellen, insbesondere einen Partikelsensor, der es ermöglicht, die Größe von Partikeln in einem Partikelstrom auch bei niedrigen Partikelkonzentrationen zuverlässig zu bestimmen.

Gemäß einem Ausführungsbeispiel der Erfindung umfasst ein Partikelsensor eine oder mehrere Strahlungsquellen, wobei die Gesamtheit der in dem Partikelsensor vorhandenen Strahlungsquellen ausgebildet ist, elektromagnetische Strahlung abzugeben, die wenigstens zwei verschiedene Wellenlängen enthält. Der Partikelsensor umfasst darüber hinaus wenigstens einen Strahlungsdetektor ("Streulichtdetektor"), der ausgebildet ist, elektromagnetische Strahlung, die von der wenigstens einen Strahlungsquelle ausgesendet und von wenigstens einem Partikel gestreut worden ist, ("Streulicht") zu detektieren und ein korrespondierendes Detektionssignal bereitzustellen, das vom Streuwinkel und/oder der Wellenlänge der elektromagnetischen Strahlung abhängig ist. Der Partikelsensor umfasst auch eine Auswertungsvorrichtung, die ausgebildet ist, das von dem wenigstens einen Strahlungsdetektor bereitgestellte Detektionssignal auszuwerten, um die Größe des wenigstens einen Strahlung streuenden Partikels zu bestimmen.

Ein Verfahren zum Bestimmen der Größe von Partikeln in einem Partikelstrom, umfasst gemäß einem Ausführungsbeispiel der Erfindung, den Partikelstrom mit elektromagnetischer Strahlung, insbesondere Licht, zu bestrahlen, wobei die elektromagnetische Strahlung Strahlung mit wenigstens zwei unterschiedlich Wellenlängen umfasst; elektromagnetische Strahlung, die von wenigstens einem Partikel in dem Partikelstrom gestreut worden ist, ("Streulicht") zu detektieren und ein Detektionssignal auszugeben, dessen Amplitude mit der Intensität der detektierten elektromagnetischen Strahlung korreliert. Das Verfahren umfasst weiterhin, aus einer Winkel-, Wellenlängen- und/oder Zeitabhängigkeit des Detektionssignals auf die Größe der Partikel in dem Partikelstrom zu schließen.

Gemäß einem Grundgedanken der Erfindung wird die Größe von Partikeln in einem Partikelstrom aus der Wellenlängen- und/oder Winkelabhängigkeit von Streulicht, d.h. von elektromagnetischer Strahlung, die an den Partikeln gestreut worden ist, bestimmt.

Die Erfindung beruht auf der Erkenntnis, dass bei Partikeln, die größer als die Wellenlänge elektromagnetischer Strahlung sind, sogenannte Mie-Streuung auftritt, die keine nennenswerte Abhängigkeit von der Wellenlänge der Strahlung, aber eine starke Winkelabhängigkeit aufweist.

An Partikeln, die kleiner als die Wellenlänge der elektromagnetischen Strahlung sind, tritt dagegen sogenannte Rayleigh-Streuung auf, die eine deutlich Abhängigkeit von der Wellenlänge der Strahlung, aber keine merkliche Winkelabhängigkeit aufweist.

Durch Feststellen, ob für einen gegebenen Partikelstrom Mie-Streuung oder Rayleigh-Streuung vorliegt, kann somit auch bei geringen Partikelkonzentrationen zuverlässig zwischen Partikelgrößen, die kleiner als die Wellenlänge der verwendeten elektromagnetischen Strahlung sind, und Partikelgrößen, die größer als die Wellenlänge der verwendeten elektromagnetischen Strahlung sind, unterschieden werden.

Als elektromagnetische Strahlung kann insbesondere Strahlung verwendet werden, deren Wellenlänge im Bereich von Infrarotlicht, UV-Licht und/oder sichtbarem Licht liegt.

In einer Ausführungsform umfasst der Partikelsensor eine breitbandige Strahlungsquelle, die elektromagnetische Strahlung über einen relativ breiten, insbesondere kontinuierlichen, Wellenlängenbereich abgibt. Die Strahlungsquelle kann beispielsweise weißes Licht abgeben. Der Partikelsensor kann auf diese Weise mit einer einzigen Strahlungsquelle betrieben werden.

In einer Ausführungsform umfasst der Partikelsensor wenigstens zwei schmalbandige Strahlungsquellen, insbesondere Laserlichtquellen, die elektromagnetische Strahlung mit voneinander unterschiedlichen Wellenlängen abgeben. Auf diese Weise kann elektromagnetische Strahlung mit exakt festgelegten Wellenlängen verwendet werden.

In einer Ausführungsform ist die von der wenigstens einen Strahlungsquelle abgegebene elektromagnetische Strahlung kollimiert oder fokussiert, um die Effizienz der Streuung zu erhöhen.

In einer Ausführungsform sind die Auswertungsvorrichtung und der wenigstens eine Strahlungsdetektor ausgebildet, das Streulicht wellenlängenabhängig auszuwerten, um aus der Wellenlängenabhängigkeit des Streulichtes auf die Größe der Partikel zu schließen. Dazu kann der wenigstens eine Strahlungsdetektor mit wenigstens einem Spektralfilter ausgestattet sein, so dass nur Strahlung in einem vorgegebenen Wellenlängenbereich auf den Strahlungsdetektor oder vorgegebene Bereiche des Strahlungsdetektors vordringen kann.

Zur Optimierung der Filtereigenschaften kann vor dem Spektralfilter ein optisches Element, beispielsweise eine Linse oder eine Anordnung ("Array") von Linsen, angeordnet sein, um Streulicht zu kollimieren und/oder für einen senkrechten Einfall des Streulichtes auf das Spektralfilter zu sorgen.

In einer Ausführungsform wird die von der wenigstens einen Strahlungsquelle abgegebene Strahlung in Abhängigkeit von ihrer Wellenlänge in verschiedenen Brennpunkten fokussiert. Ein Partikel, das den Strahlungssensor passiert, passiert so zunächst einen Brennpunkt von Strahlung mit einer ersten Wellenlänge und zu einem späteren Zeitpunkt einen Brennpunkt von Strahlung mit einer zweiten Wellenlänge. Durch eine zeitaufgelöste Auswertung des Streulichtes kann dann die Wellenlängenabhängigkeit des Streulichtes bestimmt werden. In dieser Ausführungsform müssen die Strahlungsdetektoren nicht wellenlängensensitiv sein. Insbesondere werden keine die Strahlungsintensität reduzierenden Spektralfilter benötigt.

In einer Ausführungsform umfasst der Partikelsensor wenigstens zwei Strahlungsdetektoren, die so angeordnet sind, dass sie es ermöglichen, die Winkelabhängigkeit des Streulichtes zu bestimmen. Auf diese Weise kann aus der Winkelabhängigkeit des Streulichtes auf die Größe der Partikel im Partikelstrom geschlossen werden.

Im Folgenden werden Ausführungsbeispiele der Erfindung unter Bezugnahme auf die beigefügten Zeichnungen näher beschrieben.

### Kurze Beschreibung der Figuren

Figur 1 zeigt schematisch den Aufbau eines Partikelsensors gemäß einem ersten Ausführungsbeispiel der Erfindung.
Figur 2 zeigt ein Spektrum von an großen Partikeln gestreutem Streulicht.
Figur 3 zeigt ein Spektrum von an kleinen Partikeln gestreutem Streulicht.
Figur 4 zeigt schematisch den Aufbau eines Partikelsensors gemäß einem zweiten Ausführungsbeispiel der Erfindung.
Figur 5 zeigt ein Detektionssignal von an großen Partikeln gestreutem Streulicht.
Figur 6 zeigt ein Detektionssignal von an kleinen Partikeln gestreutem Streulicht.

### Figurenbeschreibung

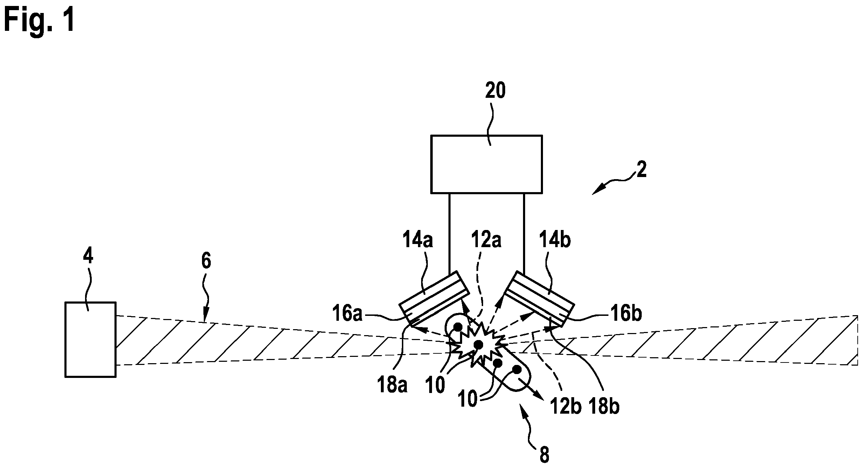

Fig. 1 zeigt in einer schematischen Darstellung den Aufbau eines Partikelsensors 2 gemäß einem ersten Ausführungsbeispiel der Erfindung.

Der Partikelsensor 2 umfasst eine breitbandige Strahlungsquelle 4, die einen Strahl 6 breitbandiger elektromagnetischer Strahlung ("Lichtstrahl 6"), beispielsweise weißes Licht, aussendet. Der Lichtstrahl 6 kann kollimiert oder (schwach) fokussiert sein.

Ein Partikelstrom 8, der zu detektierenden Partikel 10 enthält, wird quer, insbesondere orthogonal, zum Lichtstrahl 6, durch den Partikelsensor 2 geführt. Elektromagnetische Strahlung des Lichtstrahls 6, die auf ein Partikel 10 im Partikelstrom 8 trifft, wird von dem Partikel 10 gestreut und als Streulicht 12a, 12b in die Umgebung abgegeben.

Das Streulicht 12a, 12b trifft auf wenigstens einen Strahlungsdetektor 14a, 14b. Der wenigstens eine Strahlungsdetektor 14a, 14b ist so ausgebildet, dass er Detektionssignale bereitstellt, die es ermöglichen, die spektrale Zusammensetzung des Streulichts 12a, 12b zu bestimmen.

Der wenigstens eine Strahlungsdetektor 14a, 14b kann insbesondere als ZeilenDetektor (CCD/CMOS-Detektor) 14a, 14b ausgebildet sein. Vor dem wenigstens einen Strahlungsdetektor 14a, 14b kann ein Spektralfilter 16a, 16b angeordnet sein, welches bewirkt, dass verschiedene Bereiche oder Elemente des Strahlungsdetektors 14a, 14b Streulicht 12a, 12b unterschiedlicher Wellenlänge λ detektieren.

Zur Optimierung der Filtereigenschaften kann vor dem Spektralfilter 16a, 16b eine Linse 18 oder eine Anordnung ("Array") von Linsen 18 angeordnet sein, um das sphärisch emittierte Streulicht 12a, 12b zu kollimieren und/oder für einen senkrechten Lichteinfall auf das Spektralfilter 16a, 16b zu sorgen.

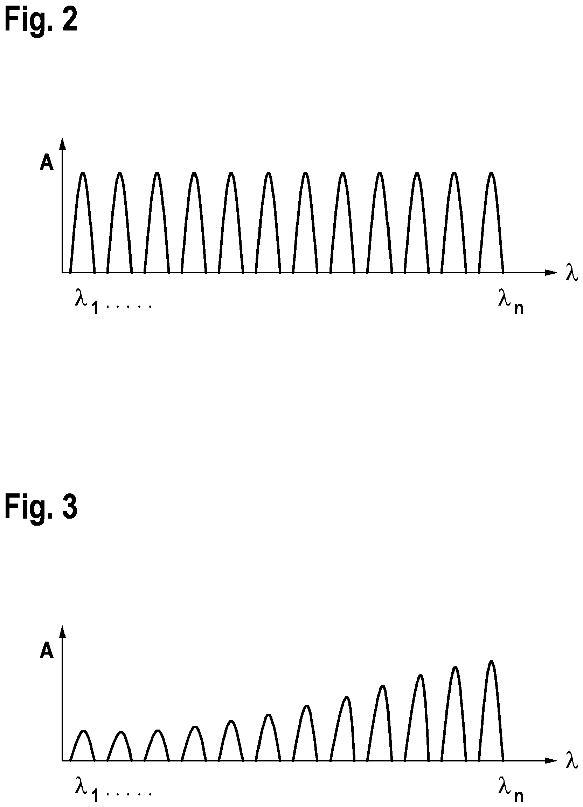

Die Figuren 2 und 3 zeigen beispielhaft zwei Spektren des Streulichts 12a, 12b für unterschiedliche Partikelgrößen. Dabei ist die Amplitude Ades detektierten Streulichts 12a, 12b auf der y-Achse gegenüber der Wellenlänge λ (x-Achse) aufgetragen.

Fig. 2 zeigt das Spektrum von Streulicht 12a, 12b, das an Partikeln 10 gestreut worden ist, die größer als die Wellenlänge λ der verwendeten elektromagnetischen Strahlung 6 sind. Fig. 3 zeigt das Spektrum von Streulicht 12a, 12b, das an Partikeln 10 gestreut worden ist, die kleiner als die Wellenlänge λ der verwendeten elektromagnetischen Strahlung 6 sind.

An Partikeln 10, die größer als die Wellenlänge λ der verwendeten elektromagnetischen Strahlung 6 sind (Fig. 2) tritt sogenannte Mie-Streuung auf. Die Amplitude von durch Mie-Streuung erzeugtem Streulicht 12a, 12b ist im Wesentlichen unabhängig von der Wellenlänge λ. Bereiche oder Elemente eines Strahlungsdetektors 14a, 14b, die für unterschiedliche Wellenlängen λ sensitiv sind, geben daher über den gesamten Wellenlängenbereich λ₁ - λₙ Signale von im Wesentlichen gleicher Amplitude A ab.

An Partikeln 10, die kleiner als die Wellenlänge λ der verwendeten elektromagnetischen Strahlung 6 sind tritt dagegen sogenannte Rayleigh-Streuung auf. Der Wirkungsquerschnitt von Rayleigh-Streuung ist proportional zu 1/λ⁴, die Amplitude A von Streulicht 12a, 12b das durch Rayleigh-Streuung erzeugt worden ist, ist daher stark von der Wellenlänge λ abhängig. Die Amplitude A ist für große Wellenlängen λ₁ klein und für kleine Wellenlängen λₙ groß, wie in der Fig. 3 gezeigt.

Durch Auswerten der Spektren des Streulichts 12, 12b, wie sie in den Figuren 2 und 3 gezeigt sind, kann eine Auswertungsvorrichtung 20 erkennen, ob Mie-Streuung (Fig. 2) oder Rayleigh-Streuung (Fig. 3) vorliegt. So kann dann bestimmt werden, ob das Partikel 10, an dem die elektromagnetische Strahlung 6 gestreut worden ist, größer oder kleiner als die Wellenlänge λ der gestreuten elektromagnetischen Strahlung 6 ist.

Da das durch Mie-Streuung erzeugte Streulicht 12a, 12b im Gegensatz zu Streulicht 12a, 12b, das durch Rayleigh-Streuung erzeugt worden ist, asymmetrisch im Raum verteilt ist, kann auch durch einen Vergleich von Detektionssignalen, die von zwei an verschiedenen Stellen im Raum angeordneten Strahlungsdetektoren 14a, 14b bereitgestellt werden, auf die Größe der Partikel 10 geschlossen werden.

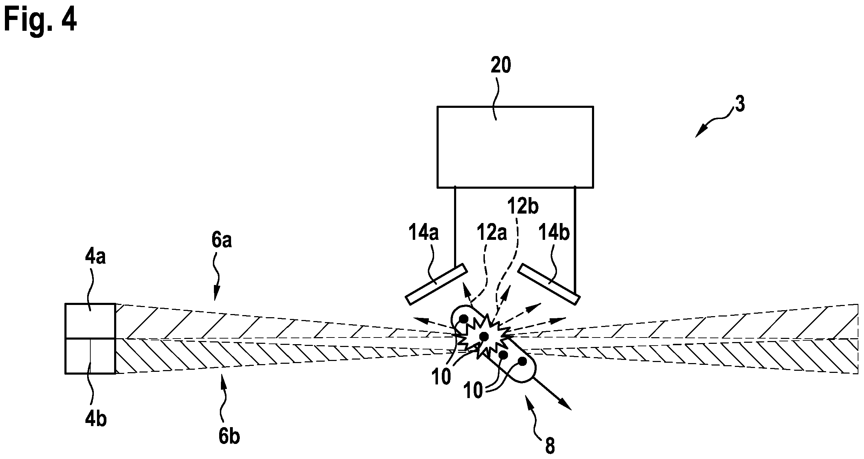

Fig. 4 zeigt in einer schematischen Darstellung den Aufbau eines Partikelsensors 3 gemäß einem alternativen Ausführungsbeispiel der Erfindung.

Der in der Fig. 4 gezeigte Partikelsensor 3 umfasst zwei schmalbandige Strahlungsquellen 4a, 4b, beispielsweise Laserlichtquellen 4a, 4b. Dabei unterscheiden sich die Wellenlängen λ der elektromagnetischen Strahlung 6a, 6b, die von den beiden Strahlungsquellen 4a, 4b abgegeben wird, voneinander. Beispielsweise kann eine erste Strahlungsquelle 4a blaues Licht 6a und eine zweite Strahlungsquelle 4b rotes Licht 6b aussenden.

Die von den beiden Strahlungsquellen 4a, 4b abgegebene elektromagnetische Strahlung 6a, 6b kann an unterschiedlichen Punkten im Raum fokussiert sein, wie in der Fig. 4 gezeigt.

Ein Partikel 10 aus einem Partikelstrom 8, der wie im ersten Ausführungsbeispiel (Fig. 1) quer, insbesondere orthogonal, zur Richtung der strahlenförmig ausgesendeten elektromagnetischen Strahlung 6a, 6b durch den Partikelsensor 3 geführt wird, durchfliegt dann nacheinander die von den beiden Strahlungsquellen 4a, 4b abgegebene elektromagnetische Strahlung 6a, 6b. Das Partikel 10 streut daher zunächst (nur) die von der ersten Strahlungsquelle 4a abgegebene elektromagnetische Strahlung 6a und zu einem etwas späteren Zeitpunkt (nur) die von der zweiten Strahlungsquelle 4b abgegebene elektromagnetische Strahlung 6b.

Ein Strahlungsdetektor 14a, 14b detektiert daher zunächst auf die erste Strahlungsquelle 4a zurückgehendes Streulicht 12a, 12b, und zu einem etwas späteren Zeitpunkt auf die zweite Strahlungsquelle 4b zurückgehendes Streulicht 12a, 12b.

Durch eine zeitabhängige Auswertung der von wenigstens einem Strahlungsdetektor 14a, 14b bereitgestellten Streulicht-Detektionssignale kann somit zwischen dem von der ersten Strahlungsquelle 4a verursachten Streulicht 12a, 12b und dem von der zweiten Strahlungsquelle 4b verursachten Streulicht 12a, 12b unterschieden werden, ohne dass der wenigstens eine Strahlungsdetektor 14a, 14b dafür mit einem Farb- oder Spektralfilter 16a, 16b versehen sein muss.

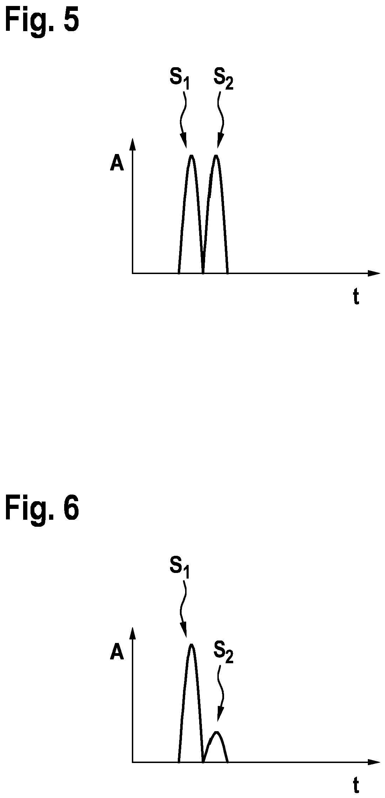

Die Figuren 5 und 6 zeigen schematisch die von einem solchen Strahlungsdetektor 14a, 14b bereitgestellten Detektionssignale S₁, S₂ für Partikel 10, die größer als die Wellenlänge λ der gestreuten Strahlung 6a, 6b sind (Fig. 5) und für Partikel 10, die kleiner als die Wellenlänge λ der gestreuten Strahlung 6a, 6b sind (Fig. 6).

Wie für das erste Ausführungsbeispiel beschrieben, tritt bei Partikeln 10, die größer als die Wellenlänge λ der gestreuten Strahlung 6a, 6b sind, Mie-Streuung auf, deren Streulicht 12a, 12b unabhängig von der Wellenlänge λ ist (Fig. 5). Bei Partikeln 10, die kleiner als die Wellenlänge λ der gestreuten Strahlung 6a, 6b sind, tritt Rayleigh-Streuung auf, deren Streulicht 12a, 12b stark von der Wellenlänge λ abhängig ist (Fig. 6). Wie zuvor erläutert, wird die Abhängigkeit von der Wellenlänge λ der gestreuten Strahlung 6a, 6b in diesem Ausführungsbeispiel durch die Zeitabhängigkeit des Detektionssignals S₁, S₂ bestimmt.

Im Falle von Mie-Streuung (Fig. 5) ist die Intensität des Streulichts 12a, 12b nicht von der Wellenlänge λ abhängig. Der Strahlungsdetektor 14a, 14b liefert daher zwei Detektionssignale S₁, S₂ mit im Wesentlichen gleicher Amplitude A, wenn das Partikel 10 nacheinander den ersten und den zweiten Lichtstrahl 6a, 6b durchfliegt.

Im Falle von Rayleigh-Streuung (Fig. 6) ist die Intensität des Streulichts 12a, 12b stark von der Wellenlänge λ abhängig. Der Strahlungsdetektor 14a, 14b liefert daher zwei Detektionssignale S₁, S₂ unterschiedlicher Amplitude A, wenn das Partikel 10 nacheinander den ersten und den zweiten Lichtstrahl 6a, 6b durchfliegt.

Durch Auswerten der zeitabhängigen Detektionssignale S₁, S₂, wie sie in den Figuren 5 und 6 gezeigt sind, kann die Auswertungsvorrichtung 20 erkennen, ob Mie-Streuung (Fig. 5) oder Rayleigh-Streuung (Fig. 6) vorliegt und demzufolge bestimmen, ob das Partikel 10, an dem die Lichtstrahlen 6a, 6b gestreut worden sind, größer oder kleiner als die Wellenlänge λ der elektromagnetischen Strahlung der Lichtstrahlen 6a, 6b ist.

Da das durch Mie-Streuung erzeugte Streulicht 12a, 12b im Gegensatz zu Streulicht 12a, 12b, das durch Rayleigh-Streuung erzeugt worden ist, asymmetrisch im Raum verteilt ist, kann auch in diesem Ausführungsbeispiel durch Vergleichen der Detektionssignale, die von zwei an verschiedenen Stellen im Raum angeordneten Strahlungsdetektoren 14a, 14b geliefert werden, auf die Größe der Partikel 10 geschlossen werden.

## Patentansprüche

1. Partikelsensor (2; 3) mit
einer oder mehreren Strahlungsquellen (4; 4a, 4b), wobei die Gesamtheit der Strahlungsquellen (4; 4a, 4b) des Partikelsensors (2; 3) ausgebildet ist, elektromagnetische Strahlung (6; 6a, 6b) abzugeben, die wenigstens zwei verschiedene Wellenlängen hat;
wenigstens einem Strahlungsdetektor (14a; 14b), der ausgebildet ist, elektromagnetische Strahlung (12a, 12b), die von der wenigstens einen Strahlungsquelle (4; 4a, 4b) ausgegeben und von wenigstens einem Partikel (10) gestreut worden ist, zu detektieren und ein korrespondierendes Detektionssignal bereitzustellen, wobei das Detektionssignal vom Streuwinkeln und/oder der Wellenlänge (λ) abhängig ist; und
einer Auswertungsvorrichtung (20), die ausgebildet ist, das von den wenigstens einen Strahlungsdetektor (14a; 14b) bereitgestellte Detektionssignal auszuwerten, um die Größe des wenigstens einen streuenden Partikels (10) zu bestimmen.

2. Partikelsensor (2; 3) nach Anspruch 1, wobei die elektromagnetische Strahlung (6; 6a, 6b) Strahlung im Bereich von Infrarotlicht, UV-Licht und/oder sichtbarem Licht ist.

3. Partikelsensor (2) nach einem der vorangehenden Ansprüche, wobei die wenigstens eine Strahlungsquelle (4) eine breitbandige Strahlungsquelle (4) ist, die elektromagnetische Strahlung (6) unterschiedlicher Wellenlänge (λ) abgibt.

4. Partikelsensor (3) nach einem der Ansprüche 1 oder 2, wobei die wenigstens eine Strahlungsquelle (4a, 4b) wenigstens zwei schmalbandige Strahlungsquellen (4a, 4b), insbesondere Laserlichtquellen, umfasst, die elektromagnetische Strahlung (6a, 6b) mit unterschiedlichen Wellenlängen (λ) abgeben.

5. Partikelsensor (2; 3) nach einem der vorangehenden Ansprüche, wobei die von der wenigstens einen Strahlungsquelle (4; 4a, 4b) abgegebene elektromagnetische Strahlung (6; 6a, 6b) kollimiert oder fokussiert ist.

6. Partikelsensor (2; 3) nach Anspruch 5, wobei elektromagnetische Strahlung (6; 6a, 6b) mit unterschiedlicher Wellenlänge (λ) in verschiedenen Brennpunkten fokussiert ist.

7. Partikelsensor (3) nach Anspruch 6, wobei die Auswertungsvorrichtung (20) ausgebildet ist, das von dem wenigstens einen Strahlungsdetektor (14a; 14b) bereitgestellte Detektionssignal zeitabhängig auszuwerten.

8. Partikelsensor (2) nach einem der vorangehenden Ansprüche, wobei die Auswertungsvorrichtung (20) ausgebildet ist, das von dem wenigstens einen Strahlungsdetektor (14a; 14b) bereitgestellte Detektionssignal wellenlängenabhängig auszuwerten.

9. Partikelsensor (2; 3) nach einem der vorangehenden Ansprüche, wobei der Partikelsensor (2; 3) wenigstens zwei Strahlungsdetektoren (14a; 14b) aufweist, die so angeordnet sind, dass sie es ermöglichen, die Winkelabhängigkeit der gestreuten elektromagnetischen Strahlung (12a, 12b) zu bestimmen.

10. Verfahren zum Bestimmen der Größe von Partikeln (10) in einem Partikelstrom (8), wobei da Verfahren umfasst,
den Partikelstrom (8) mit elektromagnetischer Strahlung (6a, 6b), insbesondere Licht, zu bestrahlen, wobei die elektromagnetische Strahlung (6a, 6b) Strahlung mit wenigstens zwei unterschiedlichen Wellenlängen (λ) umfasst;
elektromagnetische Strahlung (12a, 12b), die von wenigstens einem Partikel (10) in dem Partikelstrom (8) gestreut worden ist, zu detektieren und ein Detektionssignal auszugeben, dessen Amplitude mit der Intensität der detektierten elektromagnetischen Strahlung (12a, 12b) korreliert; und
aus einer Winkel-, Wellenlängen- und/oder Zeitabhängigkeit der detektieren elektromagnetischen Strahlung (12a, 12b) auf die Größe der Partikel (10) in dem Partikelstrom (8) zu schließen.
